(19) Europäisches Patentamt
European Patent Office
Office européen des brevets

(11) **EP 4 707 257 A1**

(12) **EUROPEAN PATENT APPLICATION**
published in accordance with Art. 153(4) EPC

(43) Date of publication:
**11.03.2026 Bulletin 2026/11**

(21) Application number: 24806935.3

(22) Date of filing: **15.04.2024**

(51) International Patent Classification (IPC):
**C04B 28/02** (2006.01)   **C04B 7/52** (2006.01)
**C04B 14/10** (2006.01)   **C04B 22/10** (2006.01)
**C04B 22/14** (2006.01)

(52) Cooperative Patent Classification (CPC):
**C04B 7/52; C04B 14/10; C04B 22/10; C04B 22/14; C04B 28/02**

(86) International application number:
**PCT/JP2024/015029**

(87) International publication number:
**WO 2024/236981 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 JP 2023080560**

(71) Applicant: **Mitsubishi UBE Cement Corporation Tokyo 100-8521 (JP)**

(72) Inventors:
- **GOTO Suguru**
  **Tokyo 100-8521 (JP)**
- **YAMASHITA Makio**
  **Tokyo 100-8521 (JP)**
- **OSAKI Masashi**
  **Tokyo 100-8521 (JP)**

(74) Representative: **Hoffmann Eitle Patent- und Rechtsanwälte PartmbB Arabellastraße 30 81925 München (DE)**

(54) **CEMENT COMPOSITION AND PRODUCTION METHOD THEREFOR**

(57)     A cement composition contains a cement clinker, an inorganic mineral, a carbonate, and gypsum. The inorganic mineral is an inorganic mineral whose BET specific surface area is reduced by pulverization. In the cement composition, a content of the inorganic mineral is 0.5 to 14.0% by mass, a total content of the inorganic mineral and the carbonate is more than 5% by mass and 15% by mass or less, and a total content of the cement clinker and the gypsum is 85% by mass or more and less than 95% by mass.

## Description

### Technical Field

The present disclosure relates to a cement composition and a method for producing the same.

### Background Art

As efforts to promote low-carbonization, cement compositions in which a part of cement clinker, which has a large amount of $CO_2$ emissions during production, is replaced with an admixture are used. Limestone is widely used as an admixture to be added to cement because it is readily available and inexpensive.

Currently, the blending amount of an admixture added to ordinary Portland cement is specified to be 5% by mass or less by JIS R 5210:2009. However, from the viewpoint of preventing global warming and promoting low-carbonization, in order to reduce the amount of cement clinker used, it is desired to further increase the replacement ratio of cement clinker with an admixture, to be a more low-carbon type of cement. On the other hand, it is known that simply adding limestone in an amount exceeding the current 5% by mass causes a decrease in strength compared to current ordinary Portland cement (for example, Non-Patent Literature 1).

Regarding the types of admixtures, according to JIS standards, fly ash, blast-furnace slag, and silica fume can be used as minor additional components in addition to limestone, but other promising admixtures are being searched for. For example, it is known that good strength development can be obtained by adding metakaolin, which is obtained by calcining the natural material kaolin, to cement (Non-Patent Literature 2).

### Citation List

### Non Patent Literature

[Non-Patent Literature 1] Ayuka Nakaguchi et al., "Quality evaluation of cement with increased amount of minor additional components", Proceedings of the Annual Meeting of Cement and Concrete Engineering, 2018, pp. 270-271
[Non-Patent Literature 2] Karen Scrivener et al.: Calcined clay limestone cements (LC3), Cement and Concrete Research, Vol. 114, pp. 49-56 (2018)

### Summary of Invention

### Technical Problem

However, the regions and countries where kaolin, the raw material for the metakaolin mentioned in Non-Patent Literature 2, is produced are limited. For this reason, if there is a material other than kaolin that can be used as an admixture, it would be extremely useful for the development of a low-carbon type of cement.

The present disclosure has been made in view of the above circumstances, and an object thereof is to provide a low-carbon type of cement composition having excellent strength development and a method for producing the same.

### Solution to Problem

One aspect of the present disclosure provides a cement composition containing a cement clinker, an inorganic mineral, a carbonate, and gypsum,

wherein the inorganic mineral is an inorganic mineral whose BET specific surface area is reduced by pulverization,
wherein a content of the inorganic mineral is 0.5 to 14.0% by mass,
wherein a total content of the inorganic mineral and the carbonate is more than 5% by mass and 15% by mass or less, and
wherein a total content of the cement clinker and the gypsum is 85% by mass or more and less than 95% by mass.

The cement composition contains an inorganic mineral whose BET specific surface area is reduced by pulverization. Such an inorganic mineral has minute pores before pulverization and has a large BET specific surface area because it adsorbs nitrogen in the pores. When such an inorganic mineral is pulverized, since the microstructure forming the pores is destroyed, the BET specific surface area is reduced. When this microstructure is destroyed, the hydration reaction of the cement easily proceeds, which contributes to the strength development of the cement composition. The cement composition contains a predetermined amount of such an inorganic mineral and a carbonate, together with a cement clinker and gypsum. For this reason, it has excellent strength development while being a low-carbon type. In the present specification, a low-carbon type of cement composition means a cement composition that can reduce an amount of $CO_2$ emissions during the production of the cement composition by replacing cement clinker with an admixture.

One aspect of the present disclosure provides a method for producing a cement composition, including a mixing step of mixing an inorganic mineral whose BET specific surface area is reduced by pulverization, a cement clinker, a carbonate, and gypsum to obtain a cement composition in which a content of the inorganic mineral is 0.5% to 14.0% by mass, a total content of the inorganic mineral and the carbonate is more than 5% by mass and 15% by mass or less, and a total content of the cement clinker and the gypsum is 85% by mass or more and less than 95% by mass, wherein, in the mixing step, mixing is performed while pulverizing so that a Blaine specific surface area of the cement composition is 3000 $cm^2$/g or more.

The method for producing a cement composition includes a mixing step of mixing an inorganic mineral whose BET specific surface area is reduced by pulverization, a carbonate, a cement clinker, and gypsum to obtain a cement composition containing these in a predetermined ratio. When the inorganic mineral is pulverized, since the microstructure forming the pores is destroyed, the BET specific surface area is reduced. When this microstructure is destroyed, the hydration reaction of the cement easily proceeds, which contributes to the strength development of the cement composition. In the method for producing a cement composition, since mixing is performed while pulverizing in the mixing step so that the Blaine specific surface area of the cement composition is 3000 $cm^2$/g or more, the inorganic mineral is appropriately pulverized, enabling the hydration reaction of the cement to be facilitated. This makes it possible to obtain a cement composition that has excellent strength development while being a low-carbon type.

One aspect of the present disclosure provides a method for producing a cement composition, including:

a first pulverizing step of pulverizing an inorganic mineral to obtain a pulverized product having a BET specific surface area less than that of the inorganic mineral before pulverization;
a second pulverizing step of pulverizing at least one of a cement clinker, gypsum, and a carbonate; and
a mixing step of mixing at least the pulverized product obtained in the first pulverizing step and the one obtained in the second pulverizing step,
wherein a cement composition, in which a content of the inorganic mineral is 0.5 to 14.0% by mass, a total content of the inorganic mineral and the carbonate is more than 5% by mass and less than 15% by mass, and a total content of the cement clinker and the gypsum is 85% by mass or more and less than 95% by mass, and which has a Blaine specific surface area of 3000 $cm^2$/g or more, is obtained.

In the method for producing a cement composition, an inorganic mineral is pulverized in a first pulverizing step to obtain a pulverized product having a BET specific surface area less than that of the inorganic mineral before pulverization. Since such a pulverized product is obtained by destroying the microstructure forming the pores of the inorganic mineral, the hydration reaction of the cement easily proceeds, which contributes to the strength development of the cement composition. By mixing at least the pulverized product obtained in the first pulverizing step and the one obtained in the second pulverizing step, a cement composition is obtained in which the content of the inorganic mineral, the total content of the inorganic mineral and the carbonate, and the total content of the cement clinker and the gypsum are in a predetermined ratio. In this way, it is possible to obtain a cement composition that has excellent strength development while being a low-carbon type.

**Advantageous Effects of Invention**

The present disclosure can provide a low-carbon type of cement composition having excellent strength development and a method for producing the same.

**Description of Embodiments**

Hereinafter, embodiments of the present disclosure will be described. However, the following embodiments are examples for explaining the present disclosure, and are not intended to limit the present disclosure to the following contents. In the following description, when "X to Y" (where X and Y are any numerical values satisfying X < Y) is described, it means "X or more and Y or less" unless otherwise specified. When a plurality of numerical ranges are exemplified stepwise, a numerical range in which an upper limit value or a lower limit value in a first numerical range is replaced with an upper limit value or a lower limit value in a second numerical range narrower than the first numerical range is also included in the present disclosure. A numerical range obtained by replacing the upper limit or lower limit of a numerical range with a numerical value of an example is also included in the present disclosure. The exemplified materials can be used alone or in combination of two or more unless otherwise specified. The content of each component in the composition means the total amount of the plurality of substances present in the composition, unless otherwise specified, when a plurality of substances corresponding to each component in the composition exist.

<Cement Composition>

A cement composition according to one embodiment contains an inorganic mineral, a carbonate, a cement clinker, and gypsum. By containing the inorganic mineral, this cement composition can reduce the content of the cement clinker. This makes it possible to provide a low-carbon type of cement composition that can reduce an amount of $CO_2$ emissions during production.

The Blaine specific surface area of the cement composition is 3000 $cm^2$/g or more, preferably 3150 $cm^2$/g or more, more preferably 3300 $cm^2$/g or more, still more preferably 3500 $cm^2$/g or more, and particularly preferably 3700 $cm^2$/g or more. The Blaine specific surface area of the cement composition is preferably 6000 $cm^2$/g or less, more preferably 5000 $cm^2$/g or less, and still more preferably 4600 $cm^2$/g or less. When the Blaine specific surface area of the cement composition is within the above range, it is possible to sufficiently reduce the pulverization cost and an amount of $CO_2$ emissions while achieving both strength development and suppression of heat generation at a sufficiently high level. The Blaine specific surface area of the cement composition can be measured in accordance with the description of JIS R 5201:2015 "Physical testing methods for cement".

(Cement Clinker)

As the cement clinker, a Portland cement clinker used for preparing various Portland cements specified in JIS R 5210:2009 "Portland cement" can be used. Examples of the Portland cement clinker include ordinary Portland cement clinker, rapid hardening Portland cement clinker, moderate-heat Portland cement clinker, low-heat Portland cement clinker, and oil-well Portland cement clinker. The Portland cement clinker may include at least one selected from the group consisting of ordinary Portland cement clinker and rapid hardening Portland cement clinker, and preferably includes ordinary Portland cement clinker.

The cement clinker includes $C_3S$, $C_2S$, $C_3A$, and $C_4AF$ as its mineral composition. The respective contents of $C_3S$, $C_2S$, $C_3A$, and $C_4AF$ can be calculated by the Bogue equations. The Bogue equations are equations widely used to calculate the content proportion of major minerals in a cement clinker from the content ratio of chemical compositions. By using the Bogue equations shown below, the contents of tricalcium silicate ($3CaO \cdot SiO_2$, denoted as $C_3S$), dicalcium silicate ($2CaO \cdot SiO_2$, denoted as $C_2S$), tricalcium aluminate ($3CaO \cdot Al_2O_3$, denoted as $C_3A$), and tetracalcium alumino-ferrite ($4CaO \cdot Al_2O_3 \cdot Fe_2O_3$, denoted as $C_4AF$) in the cement clinker can be calculated. Each chemical formula in the following Bogue equations represents the content ratio (% by mass) of each compound indicated by the chemical analysis value according to JIS R 5204:2019 "Chemical analysis method of cement by X-ray fluorescence".

<Bogue equations>

$C_3S$ [% by mass] = (4.07 $\times$ CaO [% by mass]) - (7.60 $\times$ $SiO_2$ [% by mass]) - (6.72 $\times$ $Al_2O_3$ [% by mass]) - (1.43 $\times$ $Fe_2O_3$ [% by mass]) - (2.85 $\times$ $SO_3$ [% by mass])

$C_2S$ [% by mass] = (2.87 $\times$ $SiO_2$ [% by mass]) - (0.754 $\times$ $C_3S$ [% by mass])

$C_3A$ [% by mass] = (2.65 $\times$ $Al_2O_3$ [% by mass]) - (1.69 $\times$ $Fe_2O_3$ [% by mass])

$$C_4AF \text{ [\% by mass]} = 3.04 \times Fe_2O_3 \text{ [\% by mass]}$$

The amount of $C_3S$ in the cement clinker is preferably 30.0 to 70.0% by mass, more preferably 40.0 to 66.0% by mass, and still more preferably 50.0 to 65.0% by mass. By setting the lower limit of the amount of $C_3S$ within the above range, the early strength in the hardening of the cement composition can be further improved. By setting the upper limit of the amount of $C_3S$ within the above range, heat generation during the hardening of the cement composition can be suppressed.

The amount of $C_2S$ in the cement clinker is preferably 5.0 to 65.0% by mass, more preferably 8.0 to 50.0% by mass, still more preferably 10.0 to 40.0% by mass, even more preferably 12.0 to 30.0% by mass, and particularly preferably 12.0 to 25.0% by mass. By setting the lower limit of the amount of $C_2S$ within the above range, the long-term strength in the hardening of the cement composition can be further improved. By setting the upper limit of the amount of $C_2S$ within the above range, the early strength in the hardening of the cement composition can be further improved.

The amount of $C_3A$ in the cement clinker is preferably 7.0% by mass or more, more preferably 8.0% by mass or more, still more preferably 8.5% by mass or more, even more preferably 9.0% by mass or more, and particularly preferably 9.5% by mass or more. By setting the amount of $C_3A$ within the above range, the amount of waste / by-products such as coal ash used as raw materials for the cement clinker can be increased. The amount of $C_3A$ in the cement clinker is preferably 13.0% by mass or less, more preferably 12.0% by mass or less, still more preferably 11.0% by mass or less, and even more preferably 10.5% by mass or less. By setting the amount of $C_3A$ within the above range, the regeneration of ettringite (a compound represented by $3CaO \cdot Al_2O_3 \cdot 3CaSO_4 \cdot 32H_2O$) can be suppressed, and an increase in the adiabatic temperature rise during the hardening of the cement composition can be suppressed.

The amount of $C_4AF$ in the cement clinker is preferably 7.0% by mass or more, more preferably 8.0% by mass or more, still more preferably 9.0% by mass or more, even more preferably 9.5% by mass or more, and particularly preferably 9.8% by mass or more. By setting the amount of $C_4AF$ within the above range, it is possible to produce a cement composition that increases the utilization of waste / by-products such as coal ash, which are raw materials for the cement clinker. The amount of $C_4AF$ in the cement clinker is preferably 14.0% by mass or less, more preferably 13.0% by mass or less, still more preferably 12.0% by mass or less, even more preferably 11.0% by mass or less, and particularly preferably 10.4% by mass or less. By setting the amount of $C_4AF$ within the above range, an increase in the adiabatic temperature rise during the hardening of the cement composition can be suppressed.

The content of the cement clinker based on the total amount of the cement composition may be, for example, 80 to 93% by mass, 83 to 92% by mass, or 85 to 91% by mass. When the content of the Portland cement clinker in the cement composition is 80% by mass or more, 83% by mass or more, or 85% by mass or more, better compressive strength can be obtained. When the content of the Portland cement clinker in the cement composition is 93% by mass or less, 92% by mass or less, or 91% by mass or less, an amount of $CO_2$ emissions can be further reduced.

(Inorganic Mineral)

The inorganic mineral may be a mineral produced by weathering of volcanic ejecta, that is, a mineral derived from volcanic ejecta. Examples of the volcanic ejecta include volcanic ash, lapilli, pumice, and pyroclastic flow deposits. The inorganic mineral may be a mineral produced by weathering of an igneous rock. Examples of the igneous rock include granite. Allophane is produced by weathering of volcanic ejecta or igneous rocks, halloysite is produced by further weathering of allophane, and kaolin is produced by further weathering of halloysite. Kaolin, allophane, and halloysite are clay minerals.

Examples of the inorganic mineral include allophane, halloysite, imogolite, illite, montmorillonite, and pyrophyllite. The mass ratio of $SiO_2/Al_2O_3$ of these inorganic minerals may be 0.5 to 3.0. From the viewpoint of increasing reactivity with the cement clinker, the inorganic mineral preferably contains allophane or halloysite, and more preferably contains allophane. Allophane is an amorphous inorganic mineral. Examples of the inorganic mineral containing allophane include Kanuma soil and SEKADO P1 (product name, manufactured by Shinagawa General Co., Ltd.).

In the present specification, the term "inorganic mineral" simply refers to various forms such as lumpy and granular materials, pulverized products obtained by pulverizing lumps or particles, agglomerates of aggregated particles, and granulated products. The BET specific surface area of such an inorganic mineral is preferably 30 to 350 $m^2/g$ from the viewpoint of improving kneadability. From the viewpoint of improving the strength development of the cement composition, the BET specific surface area of the inorganic mineral is preferably 350 $m^2/g$ or less, more preferably 300 $m^2/g$ or less, still more preferably 270 $m^2/g$ or less, even more preferably 200 $m^2/g$ or less, and particularly preferably 180 $m^2/g$ or less. From the viewpoint of reducing the time required for pulverizing the inorganic mineral or the cement composition, the BET specific surface area of the inorganic mineral is preferably 50 $m^2/g$ or more, more preferably 70 $m^2/g$ or more, still more preferably 100 $m^2/g$ or more, and even more preferably 150 $m^2/g$ or more. The BET specific surface area in the present specification is a value obtained from a BET plot in a relative pressure range of 0.05 to 0.35 by the BET multipoint method using nitrogen gas.

The Blaine specific surface area of the inorganic mineral can be measured in accordance with the description of JIS R 5201:2015 "Physical testing methods for cement". The Blaine specific surface area of the inorganic mineral is, for example, 8000 $cm^2/g$ or more, preferably 10000 $cm^2/g$ or more, more preferably 12000 $cm^2/g$ or more, still more preferably 14000 $cm^2/g$ or more, and even more preferably 18000 $cm^2/g$ or more. This can further enhance the strength development of the cement composition. The Blaine specific surface area of the inorganic mineral is, for example, 30000 $cm^2/g$ or less, preferably 28000 $cm^2/g$ or less, and more preferably 26000 $cm^2/g$ or less. This can reduce the pulverization cost.

The inorganic mineral is one whose BET specific surface area is reduced by pulverization. The inorganic mineral may also be one whose Blaine specific surface area is increased by pulverization. In the case of allophane, the microstructure, such as the layered structure of $SiO_2$ and $Al_2O_3$ that constitute the pores, is destroyed by pulverization. In addition, the coordination number of Al atoms changes from six-coordinate to four-coordinate, and the bonding state of the atoms also changes. It is considered that this change in the microstructure and molecular structure allows the hydration reaction of the cement to easily proceed and improves the strength development of the cement composition.

The pulverized product of the inorganic mineral may be a pulverized product obtained by pulverizing particles or granulated products with a pulverizer such as a mill, or may become a pulverized product by being pulverized when preparing the cement composition. For example, by blending a pre-pulverized inorganic mineral when preparing the cement composition, or by selecting conditions such that the inorganic mineral is pulverized when preparing the cement composition, a cement composition with excellent strength development can be obtained.

The BET specific surface area of the pulverized product of the inorganic mineral is preferably 180 $m^2$/g or less. From the viewpoint of improving the strength development of the cement composition, the BET specific surface area of the pulverized product is more preferably 160 $m^2$/g or less, still more preferably 100 $m^2$/g or less, and even more preferably 80 $m^2$/g or less. From the viewpoint of reducing the time required for pulverization, the BET specific surface area of the pulverized product of the inorganic mineral is preferably 3 $m^2$/g or more, more preferably 30 $m^2$/g or more, still more preferably 50 $m^2$/g or more, and even more preferably 70 $m^2$/g or more.

The ratio $\alpha$ of the BET specific surface area of the pulverized product of the inorganic mineral to the BET specific surface area of the inorganic mineral before pulverization is preferably 0.10 to 0.80. The ratio $\alpha$ is preferably 0.20 or more, and more preferably 0.30 or more. This can reduce the pulverization cost and the time required for pulverization. The ratio $\alpha$ is preferably 0.70 or less, and more preferably 0.60 or less. This can further enhance the strength development of the cement composition.

The ratio $\beta$ of the Blaine specific surface area of the pulverized product to the Blaine specific surface area of the inorganic mineral before pulverization is preferably 1.10 to 1.50. The ratio $\beta$ is preferably 1.15 or more, and more preferably 1.20 or more. This can further enhance the strength development of the cement composition. The ratio $\beta$ is preferably 1.40 or less, and more preferably 1.30 or less. This can reduce the pulverization cost and the time required for pulverization.

The Blaine specific surface area of the pulverized product of the inorganic mineral is preferably 10000 $cm^2$/g or more, more preferably 12000 $cm^2$/g or more, still more preferably 14000 $cm^2$/g or more, and particularly preferably 18000 $cm^2$/g or more. It is preferable that the Blaine specific surface area of the inorganic mineral is increased by 3000 $cm^2$/g or more by pulverization. By containing such a pulverized product, the compressive strength of the hardened body can be made sufficiently high.

The insoluble residue of the inorganic mineral as measured by the quantitative method of insoluble residue by a hydrochloric acid - sodium carbonate method according to JIS R 5202:2010 is preferably 1 to 50% by mass, more preferably 5 to 40% by mass, and particularly preferably 10 to 33% by mass. When the insoluble residue is 50% by mass or less, the reactivity of the inorganic mineral can be enhanced, and the strength development of the cement composition can be further enhanced. From the viewpoint of reducing the labor and cost for removing impurities that become insoluble residue, the inorganic mineral may contain 1% by mass or more of insoluble residue.

The amount of $SiO_2$ in the inorganic mineral is preferably 15 to 55% by mass, more preferably 20 to 45% by mass, and still more preferably 25 to 35% by mass, from the viewpoint of reactivity with the Portland cement clinker. The amount of $Al_2O_3$ in the inorganic mineral is preferably 15 to 55% by mass, more preferably 20 to 45% by mass, and still more preferably 30 to 40% by mass, from the viewpoint of reactivity with the Portland cement clinker.

The content of the inorganic mineral based on the total amount of the cement composition may be, for example, 0.5 to 14.0% by mass. The content of the inorganic mineral is preferably 1.0% by mass or more, more preferably 1.5% by mass or more, and still more preferably 2.0% by mass or more. This can reduce the content of cement clinker in the cement composition and further reduce $CO_2$ emissions. The content of the inorganic mineral is preferably 10.0% by mass or less, more preferably 8.0% by mass or less, still more preferably 5.0% by mass or less, and particularly preferably 4.0% by mass or less. This makes it possible to achieve a sufficiently high compressive strength of the hardened body at an age of 28 days and to obtain good kneadability.

(Carbonate)

The carbonate can facilitate the hydration reaction between the Portland cement clinker and the inorganic mineral. Examples of the carbonate include alkali metal carbonates, alkaline earth metal carbonates, and hydrates thereof, and examples include sodium carbonate, sodium carbonate decahydrate ($Na_2CO_3 \cdot 10H_2O$), potassium carbonate ($K_2CO_3$), calcium carbonate (limestone), and magnesium carbonate. Sodium sesquicarbonate dihydrate ($Na_3H(CO_3)_2 \cdot NaHCO_3 \cdot 2H_2O$) can also be used as the carbonate.

As the limestone, for example, a powder mainly composed of calcium carbonate, such as commercially available limestone powder or white limestone powder, can be used. The limestone preferably includes one that meets the requirements for minor additional components described in JIS R 5210:2009 "Portland cement".

The content of the carbonate based on the total amount of the cement composition is preferably 1.0% by mass or more, more preferably 2.0% by mass or more, still more preferably 4.0% by mass or more, and even more preferably 5.0% by mass or more, from the viewpoint of improving fluidity. The content of the carbonate in the cement composition is preferably 14.5% by mass or less, more preferably 14.0% by mass or less, still more preferably 13.0% by mass or less, particularly preferably 11.5% by mass or less, and even more preferably 9.5% by mass or less, from the viewpoint of achieving a sufficiently high compressive strength of the hardened body.

The total content of the carbonate and the inorganic mineral, based on the total amount of the cement composition, is more than 5% by mass and 15% by mass or less, from the viewpoint of reducing an amount of $CO_2$ emissions and increasing strength development. From the viewpoint of further reducing an amount of $CO_2$ emissions, the total content of the carbonate and the inorganic mineral is preferably 6% by mass or more, more preferably 7% by mass or more, and still more preferably 8% by mass or more. From the viewpoint of further enhancing the strength development of the cement composition, the total content of the carbonate and the inorganic mineral is preferably 13% by mass or less, more preferably 12% by mass or less, and still more preferably 10% by mass or less.

(Gypsum)

Examples of the gypsum include dihydrate gypsum, hemihydrate gypsum, and anhydrous gypsum. The gypsum may contain one of dihydrate gypsum, hemihydrate gypsum, and anhydrous gypsum alone, or may contain a combination of two or more thereof. By containing gypsum in the cement composition, the hydration reaction rate can be adjusted.

The content of gypsum based on the total amount of the cement composition, in terms of $SO_3$, is preferably 0.5 to 3.5% by mass, more preferably 0.7 to 3.0% by mass, and still more preferably 0.8 to 2.5% by mass, with the total amount of the cement composition being 100% by mass.

The total content of the gypsum and the cement clinker, based on the total amount of the cement composition, is 85% by mass or more and less than 95% by mass, from the viewpoint of reducing an amount of $CO_2$ emissions and increasing strength development. From the viewpoint of sufficiently increasing the content of the inorganic mineral, the total content of the gypsum and the cement clinker is preferably 94% by mass or less, more preferably 93% by mass or less, and still more preferably 92% by mass or less. From the viewpoint of further enhancing the strength development of the cement composition, the total content of the gypsum and the cement clinker is preferably 86% by mass or more, more preferably 87% by mass or more, and still more preferably 88% by mass or more.

(Other Components)

The cement composition may contain other components (excluding gypsum, carbonate, and inorganic mineral) such as an inorganic fine powder, calcium hydroxide, a powder containing calcium other than calcium hydroxide, a water-reducing agent for concrete, an accelerator, and a retarder. When the cement composition contains an inorganic fine powder, the compressive strength is further improved. The content of other components can be 10% by mass or less, may be 8% by mass or less, or may be 6% by mass or less, based on the total amount of the cement composition. Examples of the inorganic fine powder include powdery materials such as silica stone and crushed stone. The content of the inorganic fine powder in the cement composition may be more than 0% by mass or 5% by mass or more from the viewpoint of fluidity, and may be 10% by mass or less, 8% by mass or less, or 6% by mass or less from the viewpoint of compressive strength, based on the total amount of the cement composition.

<Hardened Body>

The hardened body may be one obtained by hardening a paste containing the above cement composition and water, or may be a mortar or concrete, which is obtained by blending with water and aggregate and then being hardened. The hardening conditions are not particularly limited. The hardened body can be prepared in accordance with the method described in JIS R 5201:2015 "Physical testing methods for cement".

The amount of water in the paste is preferably 15 parts by mass or more with respect to 100 parts by mass of the total amount of the cement composition from the viewpoint of fluidity, and is preferably 80 parts by mass or less from the viewpoint of easily densifying the pore structure of the hardened body. From these viewpoints, the amount of water is preferably 25 to 80 parts by mass, and more preferably 35 to 60 parts by mass.

<Method for Producing Cement Composition (1)>

A method for producing a cement composition according to one embodiment includes a first pulverizing step of pulverizing an inorganic mineral having, for example, a BET specific surface area of 30 to 350 $m^2$/g to obtain a pulverized product having a BET specific surface area lower than that of the inorganic mineral; a second pulverizing step of pulverizing at least one of a cement clinker, gypsum, and a carbonate; and a mixing step of mixing at least the pulverized product obtained in the first pulverizing step and the one obtained in the second pulverizing step, to obtain a cement composition in which the content of the inorganic mineral is 0.5 to 14.0% by mass, the total content of the inorganic mineral and the carbonate is more than 5% by mass and 15% by mass or less, and the total content of the cement clinker and the gypsum is 85% by mass or more and less than 95% by mass.

In the first pulverizing step, the inorganic mineral is pulverized. The BET specific surface area of the inorganic mineral before pulverization is preferably 160 $m^2$/g or more, more preferably 170 $m^2$/g or more, and still more preferably 180 $m^2$/g or more. By performing such pulverization, the strength development of the cement composition can be made sufficiently high. The BET specific surface area of the inorganic mineral before pulverization is 350 $m^2$/g or less, more preferably 300 $m^2$/g or less, and still more preferably 270 $m^2$/g or less. This can reduce the time and cost required for pulverization.

In the first pulverizing step, the pulverization is performed such that the ratio $\alpha$ of the BET specific surface area of the pulverized product to the BET specific surface area of the inorganic mineral before pulverization is 0.10 to 0.80. The ratio $\alpha$ is preferably 0.20 or more, and more preferably 0.30 or more. This can reduce the pulverization cost and the time required for pulverization. The ratio $\alpha$ is preferably 0.70 or less, and more preferably 0.60 or less. This can further enhance the strength development of the cement composition.

In the first pulverizing step, the pulverization is performed such that the ratio $\beta$ of the Blaine specific surface area of the pulverized product to the Blaine specific surface area of the inorganic mineral before pulverization is preferably 1.10 to 1.50. The ratio $\beta$ is preferably 1.15 or more, and more preferably 1.20 or more. This can further enhance the strength development of the cement composition. The ratio $\beta$ is preferably 1.40 or less, and more preferably 1.30 or less. This can reduce the time required for pulverization and the pulverization cost.

The pulverization may be performed using a pulverizer. Examples of the pulverizer include a standard mill, a ball mill, a vertical roller mill, and a roller press. The BET specific surface area of the pulverized product, the ratio $\alpha$, and the ratio $\beta$ can be adjusted by adjusting the pulverization time.

In the second pulverizing step, raw materials other than the inorganic mineral, that is, at least one of the carbonate, the cement clinker, and the gypsum, may be pulverized using the above pulverizer. Each of the carbonate, the cement clinker, and the gypsum may be pulverized individually, or at least two of them may be pulverized together. All of the carbonate, the cement clinker, and the gypsum may be pulverized together, or at least one of the carbonate, the cement clinker, and the gypsum may not be pulverized. In this way, in the second pulverizing step, a pulverized product containing at least one of the carbonate, the cement clinker, and the gypsum is obtained.

In the mixing step, at least the pulverized product obtained in the first pulverizing step and the one obtained in the second pulverizing step are mixed to obtain a cement composition having a Blaine specific surface area of 3000 $cm^2$/g or more. Of the cement clinker and gypsum, one(s) not pulverized in the second pulverizing step may be mixed with the pulverized product as is in the mixing step. The mixing step may be performed using, for example, a mixer such as a pan-type mixer, a tilting drum mixer, or a ribbon mixer, and a pulverizer such as a ball mill, a vertical roller mill, or a roller press. One of these may be used alone for pulverization or mixing, or a combination of two or more may be used for mixing while pulverizing.

The Blaine specific surface area of the cement composition is preferably 5000 $cm^2$/g or less, more preferably 4500 $cm^2$/g or less, and still more preferably 4000 $cm^2$/g or less. When the Blaine specific surface area of the cement composition is within the above range, it is possible to sufficiently reduce the pulverization cost and an amount of $CO_2$ emissions while achieving both strength development and suppression of heat generation at a sufficiently high level.

The method for producing a cement composition may include any step in addition to the first pulverizing step, the second pulverizing step, and the mixing step. For example, a sorting step may be included before or after the pulverizing step. In the sorting step, for the purpose of selecting an inorganic mineral with high strength development, impurities such as sand and iron scraps with a large insoluble residue and low reactivity are removed by methods such as sieving, specific gravity separation, air classification, and magnetic separation to adjust the particle size / composition of the inorganic mineral. At that time, it is desirable to perform the selection so that the insoluble residue of the inorganic mineral as measured by the quantitative method of insoluble residue by a hydrochloric acid - sodium carbonate method according to JIS R 5202:2010 is 50% by mass or less.

The description of the embodiment of the <Cement Composition> described above also applies to the production method of this embodiment. Therefore, redundant description is omitted.

<Method for Producing Cement Composition (2)>

A method for producing a cement composition according to another embodiment includes a mixing step of mixing an inorganic mineral that has, for example, a BET specific surface area of 30 to 350 $m^2$/g and whose BET specific surface area is reduced by pulverization, a cement clinker, a carbonate, and gypsum, to obtain a cement composition in which the content of the inorganic mineral is 0.5 to 14.0% by mass, the total content of the inorganic mineral and the carbonate is more than 5% by mass and 15% by mass or less, and the total content of the cement clinker and the gypsum is 85% by mass or more and less than 95% by mass, and in the mixing step, mixing is performed while pulverizing so that the Blaine specific surface area of the cement composition is 3000 cm$^2$/g or more, more preferably 4000 cm$^2$/g or more.

In this production method, in the mixing step, since the Blaine specific surface area of the cement composition is made large to 3000 cm$^2$/g or more, preferably 4000 cm$^2$/g or more, a cement composition having excellent strength development can be obtained without using a pulverized inorganic mineral. The Blaine specific surface area of the cement composition is preferably 6000 cm$^2$/g or less, more preferably 5000 cm$^2$/g or less, and still more preferably 4600 cm$^2$/g or less. When the Blaine specific surface area of the cement composition is within the above range, it is possible to sufficiently reduce the pulverization cost and an amount of $CO_2$ emissions while achieving both strength development and suppression of heat generation at a sufficiently high level.

In the mixing step, the order of mixing and pulverization is not particularly limited. That is, pulverization may be performed after mixing the raw materials, mixing may be performed after individually pulverizing the raw materials, or mixing and pulverization of the raw materials may be performed simultaneously. A part of the raw materials may be mixed while being pulverized, and then the other raw materials may be separately pulverized and/or mixed. The mixing step may be performed using, for example, a mixer such as a pan-type mixer, a tilting drum mixer, or a ribbon mixer, and a pulverizer such as a ball mill, a vertical roller mill, or a roller press. One of these may be used alone, or a combination of two or more may be used for mixing while pulverizing.

The production method of this embodiment may or may not include a pulverizing step of pulverizing the inorganic mineral. When the pulverizing step is not performed, the time and cost required for the pulverizing step can be reduced. From such a viewpoint, the BET specific surface area of the inorganic mineral used in the mixing step is preferably 160 m$^2$/g or more, more preferably 180 m$^2$/g or more, and still more preferably 190 m$^2$/g or more. From the viewpoint of further enhancing the strength development of the cement composition, the BET specific surface area of the inorganic mineral used is preferably 350 m$^2$/g or less, more preferably 300 m$^2$/g or less, still more preferably 280 m$^2$/g or less, and even more preferably 200 m$^2$/g or less. When the pulverizing step is performed, it is preferable to pulverize the inorganic mineral such that the ratio $\alpha$ of the BET specific surface area of the inorganic mineral after pulverization (the pulverized product) to the BET specific surface area of the inorganic mineral before pulverization is 0.10 to 0.80. The ratio $\alpha$ is preferably 0.20 or more, and more preferably 0.30 or more. This can reduce the pulverization cost and the time required for pulverization. The ratio $\alpha$ is preferably 0.70 or less, and more preferably 0.60 or less. This can further enhance the strength development of the cement composition.

When mixing and pulverization of each raw material are performed simultaneously in the mixing step, the inorganic mineral is pulverized simultaneously with the other raw materials. At that time, it is preferable to pulverize each raw material such that the ratio $\alpha$ of the BET specific surface area of the inorganic mineral after pulverization to the BET specific surface area of the inorganic mineral before pulverization is 0.10 to 0.80. The preferable range of the ratio $\alpha$ is as described above.

The BET specific surface area of the pulverized inorganic mineral contained in the cement composition is determined from the BET specific surface area of the cement composition after pulverization. That is, while the BET specific surface area of a cement composition having a Blaine specific surface area of 3,000 to 5,000 cm$^2$/g is usually approximately 1 m$^2$/g, the BET specific surface area of the cement composition can be sufficiently increased by containing an inorganic mineral with a large BET specific surface area. (For example, when a cement composition contains 2% by mass of an inorganic mineral with a BET specific surface area of 150 m$^2$/g, the BET specific surface area of the cement composition increases by approximately 3 m$^2$/g.) When the inorganic mineral is contained, the BET specific surface area of the entire cement composition decreases with pulverization. Therefore, by further pulverizing the cement composition, measuring the BET specific surface area, and performing extrapolation, the ratio of the BET specific surface area of the inorganic mineral between before and after pulverization can be obtained. The addition ratio of the inorganic mineral such as allophane can be determined by appropriately combining XRD Rietveld method, chemical analysis by X-ray fluorescence, wet analysis, specific gravity separation method, SEM-EDS, TEM-EDS, and the like.

The description of the embodiment of the <Cement Composition> described above also applies to the production method of this embodiment. Therefore, redundant description is omitted. Further, similar to the method for producing a cement composition (1), a sorting step may be included before the mixing step.

Although the embodiments of the present disclosure have been described above, the present disclosure is not limited to the above embodiments. The present disclosure includes the following embodiments.

[1] A cement composition containing a cement clinker, an inorganic mineral, a carbonate, and gypsum,

wherein the inorganic mineral is an inorganic mineral whose BET specific surface area is reduced by pulverization,
wherein a content of the inorganic mineral is 0.5 to 14.0% by mass,
wherein a total content of the inorganic mineral and the carbonate is more than 5% by mass and 15% by mass or less, and
wherein a total content of the cement clinker and the gypsum is 85% by mass or more and less than 95% by mass.

[2] The cement composition according to [1],

wherein the inorganic mineral is a pulverized product having a BET specific surface area of 180 $m^2$/g or less,
wherein a ratio of the BET specific surface area of the pulverized product to a BET specific surface area of the inorganic mineral before pulverization is 0.10 to 0.80, and
wherein the cement composition has a Blaine specific surface area of 3000 $cm^2$/g or more.

[3] The cement composition according to [1] or [2],

wherein the inorganic mineral has a BET specific surface area of 30 to 350 $m^2$/g, and
wherein a Blaine specific surface area of the cement composition is 4000 $cm^2$/g or more.

[4] The cement composition according to any one of [1] to [3],
wherein the inorganic mineral contains allophane.
[5] The cement composition according to any one of [1] to [4],
wherein an insoluble residue of the inorganic mineral as measured by a quantitative method of insoluble residue by a hydrochloric acid - sodium carbonate method according to JIS R 5202:2010 is 50% by mass or less.
[6] The cement composition according to any one of [1] to [4],
wherein a content of the carbonate is 1.0 to 14.5% by mass.
[7] A method for producing a cement composition,

the method including a mixing step of mixing an inorganic mineral whose BET specific surface area is reduced by pulverization, a cement clinker, a carbonate, and gypsum to obtain a cement composition in which a content of the inorganic mineral is 0.5 to 14.0% by mass, a total content of the inorganic mineral and the carbonate is more than 5% by mass and 15% by mass or less, and a total content of the cement clinker and the gypsum is 85% by mass or more and less than 95% by mass,
wherein in the mixing step, mixing is performed while pulverizing so that a Blaine specific surface area of the cement composition is 3000 $cm^2$/g or more.

[8] The method for producing a cement composition according to [7],
wherein in the mixing step, the inorganic mineral is pulverized such that a ratio of a BET specific surface area of the inorganic mixture after pulverization to a BET specific surface area of the inorganic mixture before pulverization is 0.10 to 0.80.
[9] The method for producing a cement composition according to [7],

further including a pulverizing step of pulverizing the inorganic mineral to obtain a pulverized product having a BET specific surface area of 180 $m^2$/g or less, which is less than that of the inorganic mineral,
wherein in the pulverizing step, the pulverization is performed such that a ratio of the BET specific surface area of the pulverized product to the BET specific surface area of the inorganic mineral before pulverization is 0.10 to 0.80.

[10] The method for producing a cement composition according to [9],
wherein in the pulverizing step, the pulverization is performed such that a Blaine specific surface area of the inorganic mineral is increased by 3000 $cm^2$/g or more.
[11] A method for producing a cement composition, the method including:

a first pulverizing step of pulverizing an inorganic mineral to obtain a pulverized product having a BET specific surface area less than that of the inorganic mineral;
a second pulverizing step of pulverizing at least one of a cement clinker, gypsum, and a carbonate; and
a mixing step of mixing at least pulverized product obtained in the first pulverizing step and the one obtained in the second pulverizing step,
wherein a cement composition in which a content of the inorganic mineral is 0.5 to 14.0% by mass, a total content of the inorganic mineral and the carbonate is more than 5% by mass and less than 15% by mass, a total content of the cement clinker and the gypsum is 85% by mass or more and less than 95% by mass, and which has a Blaine specific surface area of 3000 $cm^2$/g or more is obtained.

[12] The method for producing a cement composition according to [11],
wherein in the first pulverizing step, the pulverization is performed such that a ratio of a BET specific surface area of the pulverized product of the inorganic mineral to a BET specific surface area of the inorganic mineral before pulverization is 0.10 to 0.80.

EXAMPLES

Hereinafter, the content of the present disclosure will be described in more detail with reference to Examples, Comparative Examples, and Reference Examples. However, the present disclosure is not limited to the following Examples.

[Raw Materials for Cement Composition]

(Cement Clinker)

As the cement clinker, two types of Portland cement clinkers whose mineral compositions calculated by the Bogue equations are the numerical values shown in Table 1 below were used. The chemical composition of the cement used for the calculation of the Bogue equations was measured in accordance with the method described in JIS R 5204:2019 "Chemical analysis of cement by X-ray fluorescence".

[Table 1]

|  | Mineral composition by Bogue equations (mass%) | | | |
|---|---|---|---|---|
|  | $C_3S$ | $C_2S$ | $C_3A$ | $C_4AF$ |
| Cement clinker A | 56.4 | 20.0 | 9.8 | 10.2 |
| Cement clinker B | 64.2 | 12.3 | 9.8 | 10.4 |

(Gypsum)

As the gypsum, a gypsum that meets the requirements described in JIS R 9151:2009 "Natural gypsum for cement" was used.

(Admixture)

As the admixture, limestone and an inorganic mineral were prepared. As the limestone, a fine limestone powder (Blaine specific surface area value: 7470 cm$^2$/g) obtained by pulverizing limestone having a calcium carbonate content of 90% by mass or more, an aluminum oxide content of 1.0% by mass or less, and meeting the requirements for minor additional components described in JIS R 5210:2019 "Portland cement" was used. As the inorganic mineral, one containing allophane was used. As the inorganic mineral containing allophane, SEKADO P1 (product name, manufactured by Shinagawa General Co., Ltd.) or Kanuma soil (manufactured by Akagi Engei Co., Ltd.) was used.

Table 2 shows the measurement results of the insoluble residue, ignition loss (Ig.loss), and chemical components of each inorganic mineral. Ig.loss was measured in accordance with the method of JIS R 5202:2010, and the insoluble residue was measured by the hydrochloric acid - sodium carbonate method. The chemical components were determined by chemical analysis using the fundamental parameter method of X-ray fluorescence according to JIS R 5202:2010 (instrument used: ZSX-100e, manufactured by Rigaku Corporation). $R_2O$ in Table 2 is the alkali content and was calculated as $Na_2O$ content + 0.658 $K_2O$ content.

Each of the above inorganic minerals was pulverized for 60 minutes with a standard mill to prepare a pulverized product of the inorganic mineral. Table 3 shows the measurement results of the density, Blaine specific surface area, and BET specific surface area of the inorganic mineral before pulverization and the inorganic mineral after pulverization (pulverized product). The Blaine specific surface area was measured in accordance with the description of JIS R 5201:2015 "Physical testing methods for cement". At that time, the value measured by an automatic densimeter (instrument: MAT-7000, Seishin Enterprise Co., Ltd.) was used as the density value. The BET specific surface area was calculated from the measurement results of the amount of nitrogen gas adsorbed in the relative pressure range of 0.05 to 0.35 by the BET multipoint method using nitrogen gas, using BELSORP MINI (product name) manufactured by MicrotracBEL Corp.

[Table 2]

| Inorganic mineral | Insoluble residue | lg.loss | Chemical composition [mass%] | | | | |
|---|---|---|---|---|---|---|---|
| | [mass%] | [mass%] | $SiO_2$ | $Al_2O_3$ | $Fe_2O_3$ | CaO | $R_2O$ |
| SEKADO P1 | 29.3 | 26.8 | 32.1 | 36.7 | 3.0 | 0.5 | 0.5 |
| Kanuma soil | 36.9 | 20.7 | 36.9 | 36.5 | 2.9 | 0.9 | 0.7 |

[Table 3]

| Inorganic mineral | | Pulverization | Density [g/cm$^3$] | Blaine specific surface area [cm$^2$/g] | BET specific surface area [m$^2$/g] | Ratio of BET specific surface area after pulverization to before pulverization | Ratio of Blaine specific surface area after pulverization to before pulverization |
|---|---|---|---|---|---|---|---|
| A-1 | SEKADO P1 | before pulverization | 2.74 | 21040 | 272 | - | - |
| A-2 | SEKADO P1 | after pulverization | 2.74 | 25200 | 158 | 0.58 | 1.20 |
| B-1 | Kanuma soil | before pulverization | 2.45 | 11760 | 190 | - | - |
| B-2 | Kanuma soil | after pulverization | 2.45 | 14880 | 79 | 0.42 | 1.27 |

Table 3 shows the ratio of the BET specific surface area after pulverization to the BET specific surface area before pulverization, and the ratio of the Blaine specific surface area after pulverization to the Blaine specific surface area before pulverization. As shown in Table 3, for both SEKADO P1 and Kanuma soil, the BET specific surface area decreased and the Blaine specific surface area increased upon pulverization.

[Preparation of Cement Composition (1)]

To the cement clinker A having the chemical composition shown in Table 1, gypsum was added in an amount of 1.0% by mass in terms of $SO_3$ amount and mixed while pulverizing to obtain a base cement. Then, to the base cement, fine limestone powder and the inorganic mineral (before or after pulverization) from Table 3 were added and mixed according to the formulations shown in Table 4 to prepare the cement compositions of Examples 1 to 5 and Comparative Example 1. In Comparative Example 1, the inorganic mineral from Table 3 was not blended. Reference Example 1 is a cement composition containing 4% by mass of fine limestone powder and corresponding to ordinary Portland cement of JIS R 5210:2009 "Portland cement".

[Measurement of Blaine Specific Surface Area]

The Blaine specific surface area of each component of each cement composition was measured in accordance with the description of JIS R 5201:2015 "Physical testing methods for cement". The results are shown in Table 4.

[Preparation of Hardened Body]

To the prepared cement composition, standard sand for cement strength test of the Japan Cement Association as fine aggregate and water were blended, and a hardened body was prepared in accordance with the method described in JIS R 5201:2015 "Physical testing methods for cement". The prepared hardened body was cured in water in a constant temperature room at 20°C for 7 or 28 days of age.

[Measurement of Compressive Strength Ratio]

In accordance with JIS R 5201:2015 "Physical testing methods for cement", the respective compressive strengths of the above hardened bodies at ages of 7 days and 28 days were measured. The results are shown in Table 4. The compressive strength ratio is the ratio (percentage) of the compressive strength of the hardened body to be measured to the compressive strength of a reference hardened body. The reference hardened body was prepared by blending ordinary Portland cement with standard sand for cement strength test of the Japan Cement Association as fine aggregate and water, in accordance with the method described in JIS R 5201:2015 "Physical testing methods for cement".

[Table 4]

| | Cement composition | | | | | Hardened body | |
| | Cement clinker A + gypsum | Admixture | | | Blaine specific surface area | Compressive strength ratio [%] | |
| | | Fine limestone powder | Inorganic mineral | | | | |
| | | | Type | | | 7 days | 28 days |
| | Composition | Composition | | Composition | | | |
| | [mass%] | [mass%] | | [mass%] | [cm$^2$/g] | | |
| Example 1 | 91 | 7 | A-2 | 2 | 3600 | 101 | 102 |
| Example 2 | 91 | 4 | A-2 | 5 | 3980 | 109 | 107 |
| Example 3 | 91 | 7 | A-1 | 2 | 3620 | 104 | 97 |
| Example 4 | 91 | 7 | B-2 | 2 | 3450 | 101 | 99 |
| Example 5 | 91 | 7 | B-1 | 2 | 3480 | 100 | 97 |
| Reference Example 1 | 96 | 4 | - | 0 | 3210 | 100 | 100 |
| Comparative Example 1 | 91 | 9 | - | 0 | 3330 | 98 | 95 |

As shown in Table 4, the compressive strengths of the hardened bodies of Examples 1 to 5 at 7 days and 28 days of age were at the same level as that of common ordinary Portland cement (Reference Example 1). From this result, it was found that with the cement compositions of Examples 1 to 5, it is possible to obtain a hardened body having a compressive strength equivalent to the conventional one while reducing the amount of cement clinker to enable low-carbonization.

[Preparation of Cement Composition (2)]

To a pulverized product of cement clinker B having the chemical composition shown in Table 1, gypsum was added in an amount of 2.0% by mass in terms of SO$_3$ amount and mixed to obtain a base cement. Then, to the base cement, fine limestone powder and the inorganic mineral (before pulverization) from Table 3 were added and mixed according to the formulations shown in Table 5 to prepare the cement compositions of Examples 6 and 7 and Comparative Examples 2 and 3. In Comparative Examples 2 and 3, the inorganic mineral from Table 3 was not blended.

In the same manner as in Example 1 above, the Blaine specific surface area of each cement composition was measured, and a hardened body of each cement composition was prepared to measure the compressive strength ratio. The results are shown in Table 5.

[Table 5]

| | Cement composition | | | | | Hardened body | |
| | Cement clinker B + gypsum | Admixture | | | Blaine specific surface area | Compressive strength ratio [%] | |
| | | Fine limestone powder | Inorganic mineral | | | | |
| | | | Type | | | 7 days | 28 days |
| | Composition | Composition | | Composition | | | |
| | [mass%] | [mass%] | | [mass%] | [cm$^2$/g] | | |
| Example 6 | 90 | 8 | A-1 | 2 | 4520 | 107 | 108 |
| Example 7 | 90 | 8 | B-1 | 2 | 4080 | 102 | 101 |

(continued)

| | Cement composition | | | | | Hardened body | |
|---|---|---|---|---|---|---|---|
| | Cement clinker B + gypsum | Admixture | | | Blaine specific surface area | Compressive strength ratio [%] | |
| | | Fine limestone powder | Inorganic mineral | | | | |
| | | | Type | | | 7 days | 28 days |
| | Composition | Composition | | Composition | | | |
| | [mass%] | [mass%] | | [mass%] | [cm$^2$/g] | | |
| Comparative Example 2 | 95 | 5 | - | 0 | 3740 | 100 | 100 |
| Comparative Example 3 | 90 | 10 | - | 0 | 4110 | 99 | 95 |

As shown in Table 5, the compressive strengths of the hardened bodies of Examples 6 and 7 at 7 days and 28 days of age were higher than those of Comparative Examples 2 and 3. From this result, it was confirmed that with the cement compositions of Examples 6 and 7, it is possible to obtain a hardened body having a compressive strength equal to or higher than that of conventional products while reducing the amount of cement clinker to enable low-carbonization.

**Claims**

1.   A cement composition containing a cement clinker, an inorganic mineral, a carbonate, and gypsum,

wherein the inorganic mineral is an inorganic mineral whose BET specific surface area is reduced by pulverization,
wherein a content of the inorganic mineral is 0.5 to 14.0% by mass,
wherein a total content of the inorganic mineral and the carbonate is more than 5% by mass and 15% by mass or less, and
wherein a total content of the cement clinker and the gypsum is 85% by mass or more and less than 95% by mass.

2.   The cement composition according to claim 1,

wherein the inorganic mineral is a pulverized product having a BET specific surface area of 180 m$^2$/g or less,
wherein a ratio of the BET specific surface area of the pulverized product to a BET specific surface area of the inorganic mineral before pulverization is 0.10 to 0.80, and
wherein the cement composition has a Blaine specific surface area of 3000 cm$^2$/g or more.

3.   The cement composition according to claim 1,

wherein the inorganic mineral has a BET specific surface area of 30 to 350 m$^2$/g, and
wherein a Blaine specific surface area of the cement composition is 4000 cm$^2$/g or more.

4.   The cement composition according to any one of claims 1 to 3,
wherein the inorganic mineral contains allophane.

5.   The cement composition according to any one of claims 1 to 3,
wherein an insoluble residue of the inorganic mineral as measured by a quantitative method of insoluble residue by a hydrochloric acid - sodium carbonate method according to JIS R 5202:2010 is 50% by mass or less.

6.   The cement composition according to any one of claims 1 to 3,
wherein a content of the carbonate is 1.0 to 14.5% by mass.

7.   A method for producing a cement composition,

the method comprising a mixing step of mixing an inorganic mineral whose BET specific surface area is reduced by pulverization, a cement clinker, a carbonate, and gypsum to obtain a cement composition in which a content of the inorganic mineral is 0.5 to 14.0% by mass, a total content of the inorganic mineral and the carbonate is more than 5% by mass and 15% by mass or less, and a total content of the cement clinker and the gypsum is 85% by mass or more and less than 95% by mass,

wherein in the mixing step, mixing is performed while pulverizing so that a Blaine specific surface area of the cement composition is 3000 $cm^2/g$ or more.

8. The method for producing a cement composition according to claim 7,
wherein in the mixing step, the inorganic mineral is pulverized such that a ratio of a BET specific surface area of the inorganic mineral after pulverization to a BET specific surface area of the inorganic mineral before pulverization is 0.10 to 0.80.

9. The method for producing a cement composition according to claim 7, further comprising a pulverizing step of pulverizing the inorganic mineral to obtain a pulverized product having a BET specific surface area of 180 $m^2/g$ or less, which is less than that of the inorganic mineral,
wherein in the pulverizing step, the pulverization is performed such that a ratio of the BET specific surface area of the pulverized product to the BET specific surface area of the inorganic mineral before pulverization is 0.10 to 0.80.

10. The method for producing a cement composition according to claim 9,
wherein in the pulverizing step, the pulverization is performed such that a Blaine specific surface area of the inorganic mineral is increased by 3000 $cm^2/g$ or more.

11. A method for producing a cement composition, the method comprising:

a first pulverizing step of pulverizing an inorganic mineral to obtain a pulverized product having a BET specific surface area less than that of the inorganic mineral;
a second pulverizing step of pulverizing at least one of a cement clinker, gypsum, and a carbonate; and
a mixing step of mixing at least pulverized product obtained in the first pulverizing step and the one obtained in the second pulverizing step,
wherein a cement composition in which a content of the inorganic mineral is 0.5 to 14.0% by mass, a total content of the inorganic mineral and the carbonate is more than 5% by mass and less than 15% by mass, a total content of the cement clinker and the gypsum is 85% by mass or more and less than 95% by mass, and which has a Blaine specific surface area of 3000 $cm^2/g$ or more is obtained.

12. The method for producing a cement composition according to claim 11,
wherein in the first pulverizing step, the pulverization is performed such that a ratio of a BET specific surface area of the pulverized product of the inorganic mineral to a BET specific surface area of the inorganic mineral before pulverization is 0.10 to 0.80.

## INTERNATIONAL SEARCH REPORT

| International application No. |
|---|
| **PCT/JP2024/015029** |

| A. | CLASSIFICATION OF SUBJECT MATTER |
|---|---|

*C04B 28/02*(2006.01)i; *C04B 7/52*(2006.01)i; *C04B 14/10*(2006.01)i; *C04B 22/10*(2006.01)i; *C04B 22/14*(2006.01)i
FI: C04B28/02; C04B7/52; C04B14/10 B; C04B22/10; C04B22/14 B

According to International Patent Classification (IPC) or to both national classification and IPC

| B. | FIELDS SEARCHED |
|---|---|

Minimum documentation searched (classification system followed by classification symbols)

C04B28/02; C04B7/52; C04B14/10; C04B22/10; C04B22/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-172264 A (SUMITOMO OSAKA CEMENT CO., LTD.) 08 November 2018 (2018-11-08)<br>entire text | 1-12 |
| A | JP 2023-505199 A (THE BOARD OF TRUSTEES OF THE LELAND STANFORD JUNIOR UNIVERSITY) 08 February 2023 (2023-02-08)<br>entire text, all drawings | 1-12 |
| A | CN 108455961 A (UNIV JINAN) 28 August 2018 (2018-08-28)<br>whole document | 1-12 |
| A | JP 2003-128450 A (KAJIMA CORPORATION) 08 May 2003 (2003-05-08)<br>entire text, all drawings | 1-12 |
| P, A | JP 2023-131119 A (TAIHEIYO CEMENT CORPORATION) 21 September 2023 (2023-09-21)<br>entire text, all drawings | 1-12 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/015029**

| Patent document cited in search report | | | Publication date (day/month/year) | Patent family member(s) | | | Publication date (day/month/year) |
|---|---|---|---|---|---|---|---|
| JP | 2018-172264 | A | 08 November 2018 | (Family: none) | | | |
| JP | 2023-505199 | A | 08 February 2023 | WO 2021/113737 A1 whole document, whole drawing US 2023/0013411 A1 EP 4069657 A1 CN 114761369 A | | | |
| CN | 108455961 | A | 28 August 2018 | (Family: none) | | | |
| JP | 2003-128450 | A | 08 May 2003 | (Family: none) | | | |
| JP | 2023-131119 | A | 21 September 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AYUKA NAKAGUCHI et al.** Quality evaluation of cement with increased amount of minor additional components. *Proceedings of the Annual Meeting of Cement and Concrete Engineering*, 2018, 270-271

- **KAREN SCRIVENER et al.** Calcined clay limestone cements (LC3). *Cement and Concrete Research*, 2018, vol. 114, 49-56